# EUROPEAN PATENT APPLICATION

(11) **EP 4 847 746 A1**
(43) Date of publication of application: **02.12.2026**
(21) Application number: 26175573.0
(22) Date of filing: 29.04.2026
(51) Int. Cl.: F01D 25/18, F01D 25/16

(54) **THERMAL ISOLATION DESIGN FOR DOUBLE WALLED OIL SERVICE TUBES**

(30) Priority: 29.04.2025 US 202519192762
(71) Applicant: RTX Corporation, Farmington, CT 06032 (US)
(72) Inventor: GNITZCAVICH, Nicholas Daniel, Farmington, 06032 (US); ABSHIRE, Jared B., Farmington, 06032 (US); ZHANG, Xuefeng, Farmington, 06032 (US); AVIS, Thomas B., Farmington, 06032 (US); MAJEWSKI, Sebastian, Farmington, 06032 (US); NIEMIEC, Aleksander, Farmington, 06032 (US); TUTKA, Krzysztof, Farmington, 06032 (US)
(74) Representative: Dehns

(57) **Abstract**

An oil delivery system includes a bearing compartment receiving at least one bearing. The bearing compartment is connected to an oil supply inner wall (144). The oil supply inner wall (144) is connected to receive oil from an oil pump and deliver oil to the bearing compartment. There is an outer drain chamber (113) radially outwardly of the oil supply tube (144), and inwardly of an outer drain wall (142). The outer drain wall (142) is fluidly connected to a location outwardly of the bearing compartment. A thermal isolation structure (148) is on an outer periphery of the oil supply inner wall (144).

## Description

### BACKGROUND

This application relates to a double walled oil service tube for supplying oil to a bearing compartment, and wherein thermal isolation is provided for an inner wall.

Gas turbine engines are known, and typically include a propulsor delivering air into a compressor and as propulsion air. Air is compressed in the compressor and delivered into a combustor where it is mixed with fuel and ignited. Products of this combustion pass downstream over turbine rotors, driving them to rotate.

There are a number of rotating shafts in a typical gas turbine engine supported on bearings. Lubricant must be supplied to the bearings and in a bearing compartment. An oil service tube has an inner wall for receiving oil from an oil pump to deliver the oil into the bearing compartment. An outer wall is spaced from the inner wall and provides a drain tube such that if the inner wall fails the oil will be drained away from the bearing compartment, and outwardly of the engine.

Especially when the bearing compartment is in a turbine section, the inner tube is subject to high heat. This can raise challenges with an inner periphery defining a bore within the inner wall.

### SUMMARY

According to an aspect of the present invention, there is provided an oil delivery system that includes a bearing compartment receiving at least one bearing. The bearing compartment is connected to an oil supply inner wall. The oil supply inner wall is connected to receive oil from an oil pump and deliver oil to the bearing compartment. There is an outer drain chamber radially outwardly of the oil supply tube, and inwardly of an outer drain wall. The outer drain wall is fluidly connected to a location outwardly of the bearing compartment. Thermal isolation structure is on an outer periphery of the oil supply inner wall.

Optionally, and in accordance with the above, the thermal isolation structure includes insulation on the outer periphery of the oil supply inner wall.

Optionally, and in accordance with any of the above, the insulation is a fabric, including fibers.

Optionally, and in accordance with any of the above, the fibers are ceramic matrix composite fibers.

Optionally, and in accordance with any of the above, a supply tube enlargement is formed on the outer periphery of the oil supply inner wall, and spaced (e.g. closely) from an inner periphery of the outer drain wall to provide a tortuous heat path for heat reaching the outer periphery of the oil supply inner wall.

Optionally, and in accordance with any of the above, the supply tube enlargement is a supply spherical bump on the outer periphery.

Optionally, and in accordance with any of the above, an outer spherical bump is formed on an outer periphery of the outer drain wall and is in contact with static casing structure.

Optionally, and in accordance with any of the above, the supply spherical bump on the outer periphery of the oil supply inner wall is axially spaced from the outer spherical bump on the outer wall.

Optionally, and in accordance with any of the above, a supply tube enlargement is formed on the outer periphery of the oil supply inner wall, and spaced (e.g. closely) from an inner periphery of the outer drain wall to provide a tortuous heat path for heat reaching the outer periphery of the oil supply inner wall.

Optionally, and in accordance with any of the above, the supply tube enlargement is a supply spherical bump on the outer periphery.

Optionally, and in accordance with any of the above, a drain tube enlargement is formed on an outer periphery of the outer drain tube.

Optionally, and in accordance with any of the above, the supply tube enlargement on the outer periphery of the oil supply inner wall is axially spaced from the drain tube enlargement on the outer periphery of the outer drain tube wall.

According to another aspect of the present invention, there is provided a gas turbine engine that includes a propulsor, a compressor section and a turbine section. The compressor section is operable to receive air from the propulsor and compress the air, and is connected to deliver compressed air into a combustor. The combustor is operable to mix the compressed air with fuel and ignite the mixture. Products of combustion pass from the combustor downstream over a turbine section driving at least one turbine rotor to rotate. At least one shaft connects the at least one turbine rotor to at least one of a compressor rotor and a propulsor rotor. A bearing compartment receives at least one bearing to support the at least one shaft. The bearing compartment is connected to an oil supply inner wall. The oil supply inner wall is connected to receive oil from an oil pump and deliver oil to the bearing compartment. There is an outer drain chamber radially outwardly of the oil supply tube, and inwardly of an outer drain wall. The outer drain wall fluidly connects to a location outwardly of the gas turbine engine. Thermal isolation structure is on an outer periphery of the oil supply inner wall.

Optionally, and in accordance with any of the above, the thermal isolation structure includes insulation on the outer periphery of the oil supply inner wall.

Optionally, and in accordance with any of the above, the insulation is a fabric, including fibers.

Optionally, and in accordance with any of the above, a supply tube enlargement is formed on the outer periphery of the oil supply inner wall, and spaced (e.g. closely) from an inner periphery of the outer drain wall to provide a tortuous heat path for heat from the engine reaching the outer periphery of the oil supply inner wall.

Optionally, and in accordance with any of the above, a supply tube enlargement is formed on the outer periphery of the oil supply inner wall, and spaced (e.g. closely) from an inner periphery of the outer drain wall to provide a tortuous heat path for heat from the engine reaching the outer periphery of the oil supply inner wall.

Optionally, and in accordance with any of the above, a drain tube enlargement is formed on an outer periphery of the outer drain tube.

Optionally, and in accordance with any of the above, the supply tube enlargement on the outer periphery of the oil supply inner wall is axially spaced from the drain tube enlargement on the outer periphery of the outer drain tube.

Optionally, and in accordance with any of the above, the bearing compartment is in the turbine section.

The present invention may include any one or more of the individual features disclosed above and/or below alone or in any combination thereof.

These and other features of the present invention can be best understood from the following specification and drawings, the following of which is a brief description.

### BRIEF DESCRIPTION OF THE DRAWINGS

Figure 1 schematically shows a gas turbine engine.
Figure 2A shows a bearing compartment with an oil supply tube and a scavenge line.
Figure 2B schematically shows a bearing compartment.
Figure 3 shows a prior art oil service line.
Figure 4 shows a first embodiment of a thermal isolation embodiment.
Figure 5 shows a second embodiment of a thermal isolation embodiment.
Figure 6 shows a third embodiment of a thermal isolation combination.

### DETAILED DESCRIPTION

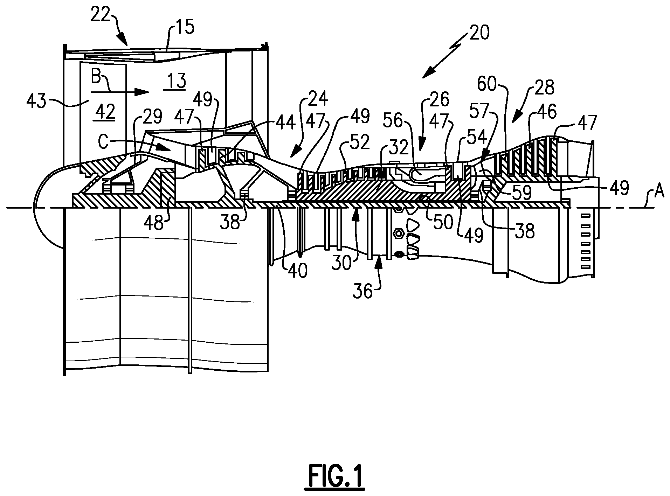

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The fan 42 may have at least 10 fan blades 43 but no more than 20 or 24 fan blades 43. In examples, the fan 42 may have between 12 and 18 fan blades 43, such as 14 fan blades 43. An exemplary fan size measurement is a maximum radius between the tips of the fan blades 43 and the engine central longitudinal axis A. The maximum radius of the fan blades 43 can be at least 40 inches (102 cm), or more narrowly no more than 75 inches (191 cm). For example, the maximum radius of the fan blades 43 can be between 45 inches (114 cm) and 60 inches (152 cm), such as between 50 inches (127 cm) and 55 inches (140 cm). Another exemplary fan size measurement is a hub radius, which is defined as distance between a hub of the fan 42 at a location of the leading edges of the fan blades 43 and the engine central longitudinal axis A. The fan blades 43 may establish a fan hub-to-tip ratio, which is defined as a ratio of the hub radius divided by the maximum radius of the fan 42. The fan hub-to-tip ratio can be less than or equal to 0.35, or more narrowly greater than or equal to 0.20, such as between 0.25 and 0.30. The combination of fan blade counts and fan hub-to-tip ratios disclosed herein can provide the engine 20 with a relatively compact fan arrangement.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49.

The low pressure compressor 44 and low pressure turbine 46 can include an equal number of stages. For example, the engine 20 can include a three-stage low pressure compressor 44, an eight-stage high pressure compressor 52, a two-stage high pressure turbine 54, and a three-stage low pressure turbine 46 to provide a total of sixteen stages. In other examples, the low pressure compressor 44 includes a different (e.g., greater) number of stages than the low pressure turbine 46. For example, the engine 20 can include a five-stage low pressure compressor 44, a nine-stage high pressure compressor 52, a two-stage high pressure turbine 54, and a four-stage low pressure turbine 46 to provide a total of twenty stages. In other embodiments, the engine 20 includes a four-stage low pressure compressor 44, a nine-stage high pressure compressor 52, a two-stage high pressure turbine 54, and a three-stage low pressure turbine 46 to provide a total of eighteen stages. It should be understood that the engine 20 can incorporate other compressor and turbine stage counts, including any combination of stages disclosed herein.

The engine 20 may be a high-bypass geared aircraft engine. It should be understood that the teachings disclosed herein may be utilized with various engine architectures, such as low-bypass turbofan engines, prop fan and/or open rotor engines, turboprops, turbojets, etc. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]^{0.5}. The corrected fan tip speed can be less than or equal to 1150.0 ft / second (350.5 meters/second), and can be greater than or equal to 1000.0 ft / second (304.8 meters/second).

The fan 42, low pressure compressor 44 and high pressure compressor 52 can provide different amounts of compression of the incoming airflow that is delivered downstream to the turbine section 28 and cooperate to establish an overall pressure ratio (OPR). The OPR is a product of the fan pressure ratio across a root (i.e., 0% span) of the fan blade 43 alone, a pressure ratio across the low pressure compressor 44 and a pressure ratio across the high pressure compressor 52. The pressure ratio of the low pressure compressor 44 is measured as the pressure at the exit of the low pressure compressor 44 divided by the pressure at the inlet of the low pressure compressor 44. In examples, a sum of the pressure ratio of the low pressure compressor 44 and the fan pressure ratio is between 3.0 and 6.0, or more narrowly is between 4.0 and 5.5. The pressure ratio of the high pressure compressor ratio 52 is measured as the pressure at the exit of the high pressure compressor 52 divided by the pressure at the inlet of the high pressure compressor 52. In examples, the pressure ratio of the high pressure compressor 52 is between 9.0 and 12.0, or more narrowly is between 10.0 and 11.5. The OPR can be equal to or greater than 45.0, and can be less than or equal to 70.0, such as between 50.0 and 60.0. The overall and compressor pressure ratios disclosed herein are measured at the cruise condition described above, and can be utilized in two-spool architectures such as the engine 20 as well as three-spool engine architectures.

The engine 20 establishes a turbine entry temperature (TET). The TET is defined as a maximum temperature of combustion products communicated to an inlet of the turbine section 28 at a maximum takeoff (MTO) condition. The inlet is established at the leading edges of the axially forwardmost row of airfoils of the turbine section 28, and MTO is measured at maximum thrust of the engine 20 at static sea-level and 86 degrees Fahrenheit (°F). The TET may be greater than or equal to 2700.0 °F (1482 °C), or more narrowly less than or equal to 3500.0 °F (1927 °C), such as between 2750.0 °F (1510 °C) and 3350.0 °F (1843 °C). The relatively high TET can be utilized in combination with the other techniques disclosed herein to provide a compact turbine arrangement.

The engine 20 establishes an exhaust gas temperature (EGT). The EGT is defined as a maximum temperature of combustion products in the core flow path C communicated to at the trailing edges of the axially aftmost row of airfoils of the turbine section 28 at the MTO condition. The EGT may be less than or equal to 1000.0 °F (538 °C), or more narrowly greater than or equal to 800.0 °F (427 °C), such as between 900.0 °F (482 °C) and 975.0 °F (524 °C). The relatively low EGT can be utilized in combination with the other techniques disclosed herein to reduce fuel consumption.

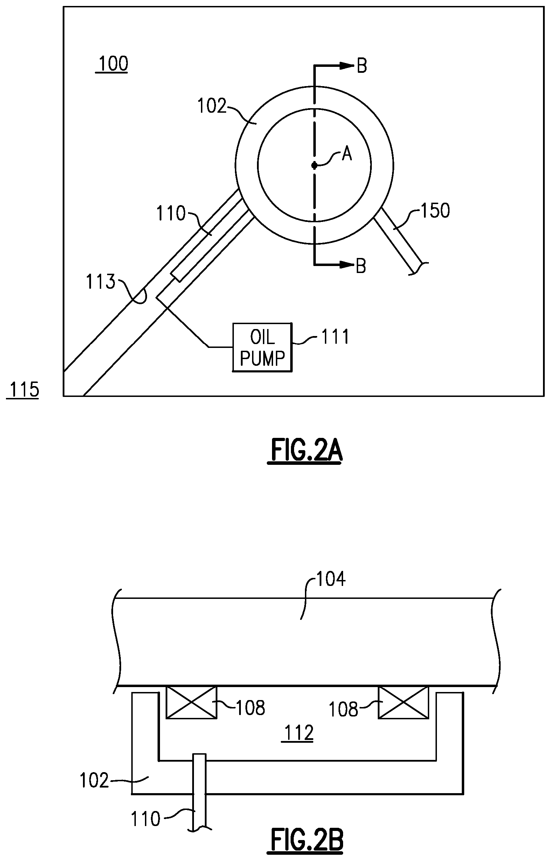

Figure 2A shows a bearing housing 102 that may be in a mid-turbine frame such as mid-turbine frame 57 as shown in Figure 1. Oil is supplied into bearing housing 102 from supply line 110. An oil pump 111 is shown schematically delivering oil into the oil supply tube 110. A scavenge line 150 is also shown for scavenging lubricant from an interior bearing compartment and returning it to an oil sump. As shown, lines 110 and 150 are at a vertically lower location.

As shown, the oil supply tube 110 is received within an outer drain tube 113. As mentioned above, should the inner tube fail, the oil will drain away through tube 113 to location 115 that is outside of an engine 100.

Bearing housing 102 is shown in Figure 2B. Bearings 108 support rotation of a shaft 104, which may be a shaft such as shown in Figure 1. Oil supply tube 110 is shown schematically for delivering oil into a bearing compartment 112 receiving the bearings 108.

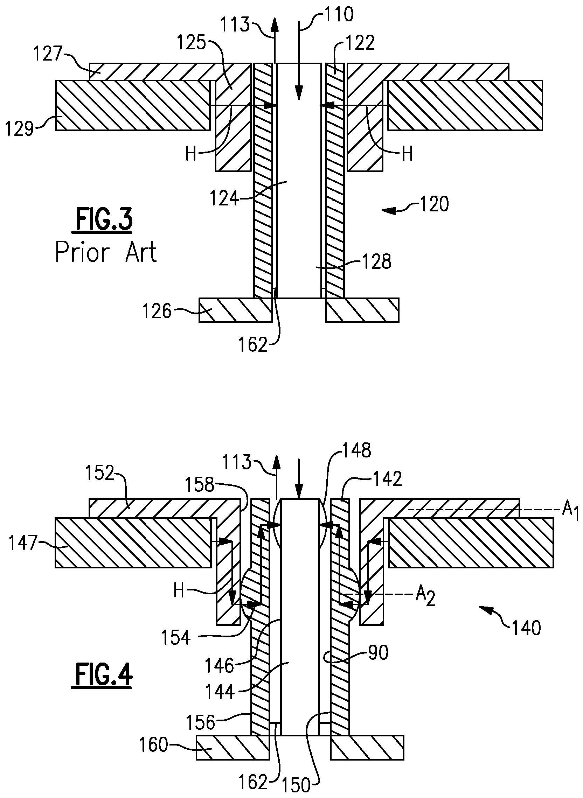

Figure 3 shows a prior art oil service tube 120. There is outer wall 122 and inner wall 124. A drain chamber 113 is formed between an outer periphery of the tube 124 and an inner periphery of the outer wall 122 and drains to location 115 as shown in Figure 2A. A bottom wall 162 connects walls 122 and 124. Outer wall 122 is fixed to a bearing compartment housing 126, and a non-fixed interface with a case flange 125. As shown, an outer module case 129 is hot, and delivers heat H through the outer wall 122, and at the inner wall 124. The heat can cause coking in oil within the inner wall 124.

Thus, Figure 4 shows an embodiment 140 which provides thermal isolation for the inner wall 144. Again a bottom wall 162 connects inner wall 144 and outer wall 142. In the embodiment 140 the inner wall 144 has a cylindrical portion 146, but also spherical bumps 148. Bumps 148 are spaced slightly from an inner wall 90 of the outer wall 142. There are also spherical bumps 154 on an outer periphery of the outer wall 142 that are in contact with a case flange 152. Now, as shown, the heat transfer path H between an outer module case 147 and the inner wall 144 is much more complex, and tortuous.

As shown, the outer wall 142 is fixed to a bearing compartment housing 160. While the flow of lubricant in this Figure is shown to be from a vertically upper location to a vertically lower bearing compartment, in fact, in practice, it will typically be the opposite.

As shown, the spherical bump 148 on the outer periphery of the inner wall 144 is centered at a first axial location A₁ whereas the bump on the outer periphery of the outer wall is centered at a location A₂ which is spaced from A₁. This increases the length of the tortuous heat path H between the engine casing and the outer periphery of the inner wall.

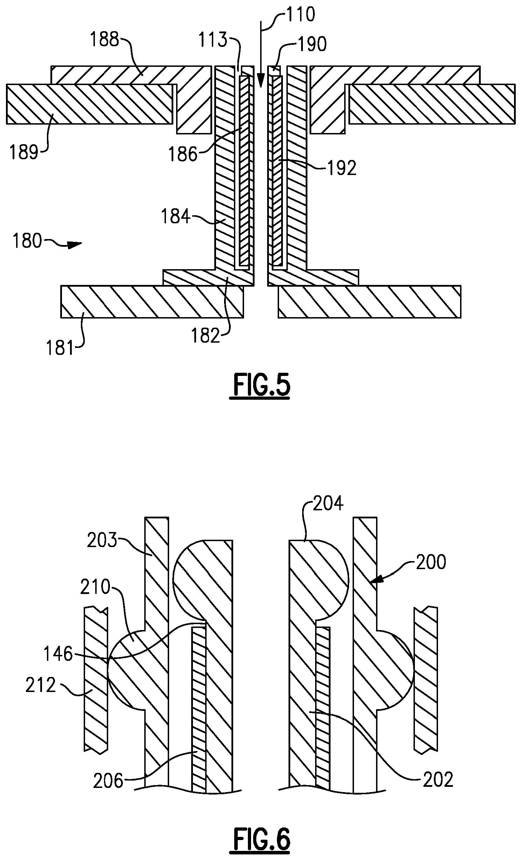

Figure 5 shows an embodiment 180 wherein the outer wall 184 and inner wall 190 are attached to a bearing support 181. As shown, a bottom wall 182 connects outer wall 184 and inner wall 190. A case flange 188 and outer module case 189 are again transferring heat toward the inner wall 190. However, an insulation layer 186 is placed on an outer periphery of the inner wall 190.

In the past insulation has been used in oil service lines. However, the use of the insulation in the prior art has been on an outer periphery of the outer wall. Preventing heat to the outer wall is of less import than isolating the inner wall, as the outer wall and its chamber 113 typically do not include any oil.

In embodiments, the insulation may be a fabric including a plurality of fibers. In one embodiment, the fibers could be ceramic matrix composites. A particular insulation material available under the trade name Nextel-312 may be utilized in some embodiments. However, it should be understood that other insulations would come within the scope of this disclosure.

Figure 6 shows an embodiment 200 wherein the inner wall 202 has the spherical bump 204. The outer wall 203 has the spherical bump 210 in contact with the case flange 212 and axially spaced from bump 204. In addition insulation is provided at 206 around an outer periphery of the inner wall 202. In a sense, the Figure 6 embodiment combines the features of Figures 4 and 5.

While spherical bumps are shown other shape enlargements which are radially larger than cylindrical portion 146 may be used.

An oil delivery system under this disclosure could be said to include a bearing compartment receiving at least one bearing. The bearing compartment is connected to an oil supply inner wall. The oil supply inner wall is connected to receive oil from an oil pump and deliver oil to the bearing compartment. There is an outer drain chamber radially outwardly of the oil supply tube, and inwardly of an outer drain wall. The outer drain wall is fluidly connected to a location outwardly of the bearing compartment. There is a thermal isolation structure on an outer periphery of the oil supply inner wall.

A gas turbine engine under this disclosure could be said to include a propulsor, a compressor section and a turbine section. The compressor section is operable to receive air from the propulsor and compress the air, and connected to deliver compressed air into a combustor. The combustor is operable to mix the compressed air with fuel and ignite the mixture. Products of combustion passing from the combustor downstream over a turbine section driving at least one turbine rotor to rotate. At least one shaft connects the at least one turbine rotor to at least one of a compressor rotor and a propulsor rotor. A bearing compartment receives bearings to support the at least one shaft. The bearing compartment is connected to an oil supply inner wall. The oil supply inner wall is connected to receive oil from an oil pump and deliver oil to the bearing compartment. There is an outer drain chamber radially outwardly of the oil supply tube, and inwardly of an outer drain wall. The outer drain wall is fluidly connected to a location outwardly of the gas turbine engine. There is a thermal isolation structure on an outer periphery of the oil supply inner wall.

Although embodiments have been disclosed, a worker of ordinary skill in this art would recognize that modifications would come within the scope of this disclosure. As one example, while the propulsor is disclosed as a fan it could also be an open rotor. For that reason, the following claims should be studied to determine the true scope and content of this disclosure.

## Claims

1. An oil delivery system comprising:
a bearing compartment (112) configured to receive at least one bearing (108);
an oil supply inner wall (144;190;202) to which said bearing compartment (112) is connected;
an oil pump (111), wherein said oil supply inner wall (144;190;202) is connected to receive oil from said oil pump (111) and deliver oil to the bearing compartment (112);
an outer drain wall (142;184;203);
an outer drain chamber (113) radially outward of the oil supply inner wall (144; 190;202) and radially inward of the outer drain wall (142;184;203), wherein the outer drain chamber (113) (142;184;203) is fluidly connected to a location outside of the bearing compartment (112); and
a thermal isolation structure (148;186;206) on an outer periphery of the oil supply inner wall (144;190;202).

2. The system as set forth in claim 1, wherein the thermal isolation structure (148;186;206) includes insulation on the outer periphery of the oil supply inner wall (144;190;202).

3. The system as set forth in claim 2, wherein the insulation is a fabric, including fibers.

4. The system as set forth in claim 3, wherein the fibers are ceramic matrix composite fibers.

5. The system as set forth in any preceding claim, wherein a supply tube enlargement (148;204) is formed on the outer periphery of the oil supply inner wall (144;202) and spaced apart from an inner periphery (90) of the outer drain wall (142;203).

6. The system as set forth in claim 5, wherein the supply tube enlargement (148;204) is a supply spherical bump on the outer periphery of the oil supply inner wall (144;202).

7. The system as set forth in claim 6, wherein an outer spherical bump (154;210) is formed on an outer periphery of the outer drain wall (142;203) and is in contact with a static casing structure (152;212).

8. The system as set forth in claim 7, wherein the supply spherical bump on the outer periphery of the oil supply inner wall (144;202) is axially spaced from the outer spherical bump (154;210) on the outer drain wall (142;203) along the length of the oil supply inner wall (144;202).

9. The system as set forth in claim 6, wherein a drain tube enlargement (154;210) is formed on an outer periphery of the outer drain wall (142;203).

10. The system as set forth in claim 9, wherein the supply tube enlargement (148;204) on the outer periphery of the oil supply inner wall (144;202) is axially spaced from the drain tube (154;210) enlargement on the outer periphery of the outer drain wall (142;203).

11. A gas turbine engine (20) comprising:
a propulsor, a compressor section (24), a combustor (56) and a turbine section (28), the compressor section (24) configured to receive air from the propulsor (42) and compress the air and connected to deliver compressed air into the combustor (56), the combustor (56) operable to mix the compressed air with fuel and ignite the mixture, wherein the gas turbine engine (20) is configured such that products of combustion passing from the combustor (56) downstream over the turbine section (28) drive at least one turbine rotor (46) to rotate, at least one shaft (40) connects the at least one turbine rotor (46) to at least one of a compressor rotor (44) and a propulsor rotor (42); and
the oil delivery system of any preceding claim, wherein the outer drain chamber (113) is fluidly connected to a location outside of the gas turbine engine (20).

12. The gas turbine engine (20) as set forth in claim 11, wherein a supply tube enlargement (148;204) is formed on the outer periphery of the oil supply inner wall (144;202), and spaced apart from an inner periphery of the outer drain wall (142;203).

13. The gas turbine engine (20) as set forth in claim 12, wherein a drain tube enlargement (154;210) is formed on an outer periphery of the outer drain wall (142;203).

14. The gas turbine engine (20) as set forth in claim 13, wherein the supply tube enlargement (148;204) on the outer periphery of the oil supply inner wall (144;202) is axially spaced from the drain tube enlargement (154;210) on the outer periphery of the outer drain wall (142;203).

15. The gas turbine engine as set forth in any of claims 11 to 14, wherein the bearing compartment (112) is in the turbine section (28).
